(19) Europäisches Patentamt
European Patent Office
Office européen des brevets

(11) **EP 1 397 003 B1**

(12) **EUROPÄISCHE PATENTSCHRIFT**

(45) Veröffentlichungstag und Bekanntmachung des Hinweises auf die Patenterteilung:
**06.10.2010 Patentblatt 2010/40**

(51) Int Cl.:
***H04N 7/01*** *(2006.01)*   ***H04N 7/46*** *(2006.01)*

(21) Anmeldenummer: **03017469.2**

(22) Anmeldetag: **01.08.2003**

(54) **Verfahren zur bewegungsvektorgestützten Interpolation eines Bildpunktes eines Zwischenbildes einer Bildfolge**

Motion compensated frame interpolation

Méthode pour l'interpolation d'un pixel contenu dans une image intermédiaire d'une suite d'image à l'aide de vecteurs de mouvement

(84) Benannte Vertragsstaaten:
**DE FR GB IT NL**

(30) Priorität: **07.08.2002 DE 10236207**

(43) Veröffentlichungstag der Anmeldung:
**10.03.2004 Patentblatt 2004/11**

(73) Patentinhaber: **Trident Microsystems (Far East) Ltd.**
**Grand Cayman (KY)**

(72) Erfinder:
• **Hahn, Marko**
**81373 München (DE)**
• **Scheffler, Günter**
**80939 München (DE)**
• **Rieder, Peter**
**81737 München (DE)**
• **Tuschen, Christian**
**80687 München (DE)**
• **Schu, Markus**
**85435 Erding (DE)**

(74) Vertreter: **Epping - Hermann - Fischer Patentanwaltsgesellschaft mbH Ridlerstrasse 55 80339 München (DE)**

(56) Entgegenhaltungen:
**US-A- 4 383 272**

• **KAWAGUCHI K ET AL: "Frame rate up-conversion considering multiple motion" IMAGE PROCESSING, 1997. PROCEEDINGS., INTERNATIONAL CONFERENCE ON SANTA BARBARA, CA, USA 26-29 OCT. 1997, LOS ALAMITOS, CA, USA, IEEE COMPUT. SOC, US, 26. Oktober 1997 (1997-10-26), Seiten 727-730, XP010254274 ISBN: 0-8186-8183-7**
• **BLUME H: "Nonlinear vector error tolerant interpolation of intermediate video images by weighted medians - deterministic properties" SIGNAL PROCESSING. IMAGE COMMUNICATION, ELSEVIER SCIENCE PUBLISHERS, AMSTERDAM, NL, Bd. 14, Nr. 10, August 1999 (1999-08), Seiten 851-868, XP004173770 ISSN: 0923-5965**
• **CHOI B-T ET AL: "NEW FRAME RATE UP-CONVERSION USING BI-DIRECTIONAL MOTION ESTIMATION" IEEE TRANSACTIONS ON CONSUMER ELECTRONICS, IEEE INC. NEW YORK, US, Bd. 46, Nr. 3, August 2000 (2000-08), Seiten 603-609, XP001142884 ISSN: 0098-3063**

**Beschreibung**

Die vorliegende Erfindung betrifft ein Verfahren zur bewegungsvektorgestützten Interpolation eines Bildpunktes eines Zwischenbildes einer Bildfolge.

Eine derartige Zwischenbildinterpolation ist in hinlänglich bekannter Weise beispielsweise bei der Erzeugung einer 100Hz-Bildfolge zur Darstellung in einem Fernsehgerät aus einer empfangenen 50Hz-Bildfolge oder bei der Erzeugung einer Zeitlupenfolge, bei der mehrere zeitlich aufeinander folgende Zwischenbilderbilder zwischen zwei Eingangsbildern erzeugt werden, erforderlich. Um Bewegungsabläufe bei der Zwischenbildinterpolation richtig wiederzugeben, ist es hinlänglich bekannt, Bewegungsvektoren bei der Zwischenbildinterpolation zu verwenden, wobei ein Verfahren zur Schätzung solcher Bewegungsvektoren beispielsweise in der US 5,386,248 beschrieben ist.

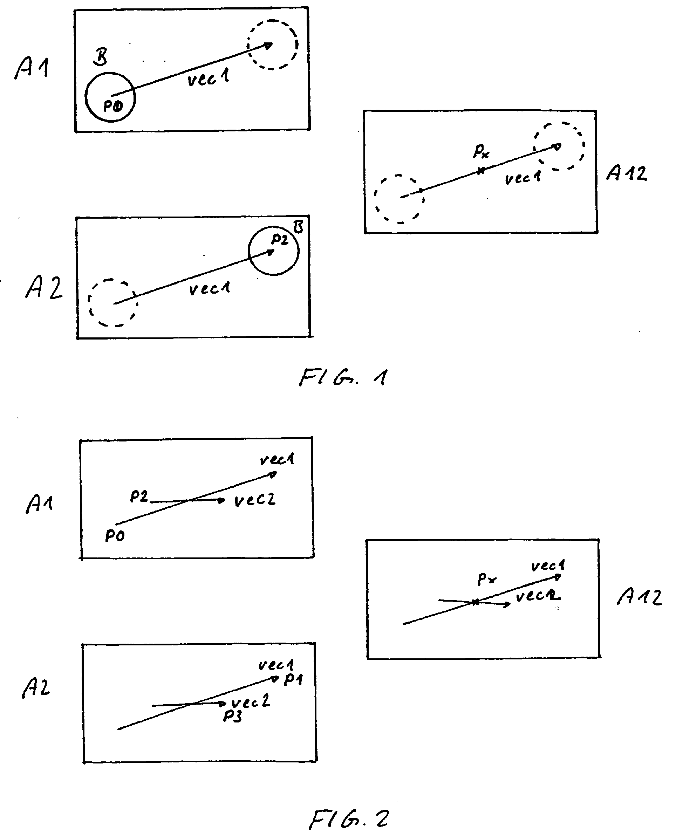

Das grundsätzliche Vorgehen bei der Zwischenbildinterpolation unter Verwendung eines Bewegungsvektors wird nachfolgend zum besseren Verständnis anhand von Figur 1 erläutert.

Figur 1 zeigt schematisch ein erstes und ein zweites Bild A1, A2 einer Eingangsbildfolge, die zeitlich aufeinander folgend vorliegen und zu denen ein interpoliertes Zwischenbild A12 erzeugt wird, das entsprechend der Eingangsbilder A1, A2 eine Vielzahl von Bildpunkten aufweist, von denen in Figur 1 ein Bildpunkt Px schematisch eingezeichnet ist. Diesem Bildpunkt ist wenigstens ein Bewegungsvektor vec1 zugeordnet, der anhand der Eingangsbildfolge in bekannter Weise erzeugt wird. Der Erzeugung des Bewegungsvektors liegt zugrunde, dass sich ein sich bewegendes Objekt B zum Zeitpunkt des ersten Eingangsbildes an einer ersten Position in dem ersten Eingangsbild A1 befindet und bis zur "Aufnahme" des zweiten Eingangsbildes an eine zweite Position in dem zweiten Eingangsbild A2 "wandert". Der Bewegungsvektor vecl enthält die Bewegungsinformation dieses Objekts. Zur Verdeutlichung ist in dem Eingangsbild A1 die Position des Objekts nach der Bewegung und in dem Eingangsbild A2 die Position des Objekts vor der Bewegung zusammen mit dem Bewegungsvektor vec1 dargestellt. Unter Verwendung des Bewegungsvektors vecl und des Bildinformationswertes P0 am Anfangspunkt des Vektors vecl in Bild A1 oder des Bildinformationswertes P1 am Endpunkt des Bewegungsvektors vec1 in Bild A2 kann unter Beachtung der Rasterlage des Zwischenbildes A12 in Bezug auf die Eingangsbilder A1, A2 der auf der Bewegungslinie des Vektors vec1 liegende Bildpunkt Px des Zwischenbildes ermittelt werden.

Zur Interpolation des Bildpunktes Px genügt es theoretisch, den am Anfangspunkt des dem Bildpunkt Px zugeordneten Bewegungsvektors vec1 liegenden Bildpunkt P0 in dem ersten Bild oder den am Endpunkt des Bewegungsvektors vec1 liegenden Bildpunkt P1 in dem Bild A2 auszuwählen.

Allerdings ist die Schätzung des Bewegungsvektors bzw. der Bewegungsvektoren mit Unsicherheiten behaftet. Aus diesem Grund ist es bekannt, einem zu interpolierenden Bildpunkt zwei Bewegungsvektoren zuzuordnen, die Bildinformation des Anfangspunktes in einem ersten Eingangsbild und die Bildinformation des Endpunktes in einem zweiten Eingangsbild des einen Bewegungsvektoren sowie den Mittelwert aus den Bildinformationen des Anfangspunktes und des Endpunktes des anderen Bewegungsvektors einer Medianfilterung zu unterwerfen und den daraus resultierenden Bildinformationswert als Bildinformationswert für den zu interpolierenden Bildpunkt zu verwenden.

Die Veröffentlichung US-A-4383272 beschreibt ein Verfahren zur bewegungsvektorgestützten Interpolation eines Bildpunktes. Bei diesem Verfahren wird unter Verwendung eines Bewegungsvektors ein erster Interpolationswert aus dem Bildinformationswert eines ersten und zweiten Bildpunktes ermittelt. Der erste Bildpunkt liegt dabei am Anfangspunkt des Bewegungsvektors in einem ersten Bild und der zweite Bildpunkt liegt am Endpunkt des Bewegungsvektors in einem zweiten Bild. Unter Verwendung des Nullvektors als Bewegungsvektor wird bei diesem Verfahren außerdem ein zweiter Interpolationswert ermittelt. Von diesen beiden Interpolationswerten wird einer als Bildinformationswert des zu interpolierenden Bildpunktes ausgewählt. Hierzu wird die Differenz der zur Erzeugung des ersten Interpolationswertes verwendeten Bildinformationswerte und die Differenz der zur Erzeugung des zweiten Interpolationswerts verwendeten Bildinformationswerte erzeugt. Der unter Verwendung des Bewegungsvektors erzeugte Interpolationswert wird dabei dann ausgewählt, wenn die Differenz der zur Erzeugung dieses Interpolationswertes verwendeten Bildinformationswerte kleiner ist als die Differenz der zur Erzeugung des zweiten Interpolationswerts verwendeten Bildinformationswerte.

Ziel der vorliegenden Erfindung ist es, ein verbessertes Verfahren zur bewegungsvektorgestützten Zwischenbildinterpolation zur Verfügung zu stellen.

Dieses Ziel wird durch ein Verfahren gemäß der Merkmale des Anspruchs 1 gelöst. Vorteilhafte Ausgestaltungen der Erfindung sind Gegenstand der Unteransprüche.

Das erfindungsgemäße Verfahren zur bewegungsvektorgestützten Interpolation eines Bildpunktes eines zwischen zwei Eingangsbildern liegenden Zwischenbildes, sieht vor, einen ersten Bildpunkt, dem ein erster Bildinformationswert zugeordnet ist, aus dem ersten Eingangsbild unter Verwendung eines ersten Bewegungsvektors auszuwählen und einen zweiten Bildpunkt, dem ein zweiter Bildinformationswert zugeordnet ist, aus dem zweiten Eingangsbild unter Verwendung des ersten Bewegungsvektors auszuwählen. Außerdem wird ein dritter Bildpunkt, dem ein dritter Bildinformationswert zugeordnet ist, aus dem ersten Eingangsbild unter Verwendung eines zweiten Bewegungsvektors und ein vierter Bildpunkt, dem ein vierter Bildinformationswert zugeordnet ist, aus dem zweiten Eingangsbild unter Verwendung des zweiten Bewegungsvektors ausgewählt. Die Ermittlung der Bewegungsvektoren, die dem zu interpolierenden Bildpunkt zugeordnet sind, können mittels herkömmlicher Verfahren zur Schätzung von Bewegungsvektoren ermittelt werden.

Nach der Ermittlung der ersten bis vierten Bildinformationswerte wird ein durch den ersten und zweiten Bildinformationswert vorgegebenes Intervall und/oder ein durch den dritten und vierten Bildinformationswert vorgegebenes Intervall ermittelt. Zudem werden die Bildinformationswerte gemischt, indem der erste Bildinformationswert mit einem ersten Gewichtungsfaktor, der zweite Bildinformationswert mit einem zweiten Gewichtungsfaktor, der dritte Bildinformationswert mit einem dritten Gewichtungsfaktor und der vierte Bildinformationswert mit einem vierten Gewichtungsfaktor multipliziert und die dadurch erhaltenen gewichteten Bildinformationswerte addiert werden, um einen Bildinformationswert des Bildpunktes des Zwischenbildes zu erhalten. Die Gewichtungsfaktoren sind dabei so gewählt, dass dieser Bildinformationswert innerhalb des durch den ersten und zweiten Bildinformationswert oder des durch den zweiten und dritten Bildinformationswert vorgegebenen Intervalls liegt.

Vorzugsweise wird das durch den ersten und zweiten Bildinformationswert vorgegebene Intervall und das durch den dritten und vierten Bildinformationswert vorgegebene Intervall ermittelt, wobei bei der Ermittlung der Gewichtungsfaktoren das Intervall verwendet wird, dessen betragsmäßiger Abstand zwischen den Intervallgrenzen kleiner ist.

Bei einer Ausführungsform der Erfindung ist vorgesehen, den ersten und zweiten Bildinformationswert jeweils gleich zu gewichten und/oder den dritten vierten Bildinformationswert jeweils gleich zu gewichten.

Bei einer weiteren Ausführungsform der Erfindung ist vorgesehen, als einen der beiden Bewegungsvektoren einen Nullvektor zu wählen. Durch die Wahl eines der beiden Bewegungsvektoren als Nullvektor fließen in die Interpolation des Bildpunktes des Zwischenbildes die Bildinformationen der Bildpunkte ein, die sich an derselben Position wie der zu interpolierende Bildpunkt in dem ersten und zweiten Eingangsbild befinden.

Vorzugsweise erfolgt die Interpolation stufenweise wobei zunächst ein erster Zwischenwert durch Mischen des ersten und zweiten Bildinformationswertes und ein zweiter Zwischenwert durch Mischen des dritten und vierten Bildinformationswertes erzeugt und die Zwischenwerte unter Verwendung eines weiteren Gewichtungsfaktors gewichtet werden, um den Bildinformationswert des Bildpunktes des Zwischenbildes zu erhalten. Vorzugsweise werden der erste und der zweite Bildinformationswert bei der Erzeugung des ersten Zwischenwertes gleich gewichtet, woraus insgesamt eine Gleichgewichtung des ersten und zweiten Bildinformationswertes in dem zu interpolierenden Bildpunkt resultiert. Außerdem werden der dritte und vierte Bildinformationswert bei der Erzeugung des zweiten Zwischenwertes gleich gewichtet, woraus insgesamt eine Gleichgewichtung des dritten und vierten Bildinformationswertes in dem zu interpolierenden Bildpunkt resultiert.

Die vorliegende Erfindung wird nachfolgend in Ausführungsbeispielen anhand von Figuren näher erläutert. In den Figuren zeigt

Figur 1     eine schematische Darstellung zweier Eingangsbilder und eines unter Verwendung eines Bewegungsvektors interpolierten Zwischenbildes,

Figur 2     eine schematische Darstellung zweier Eingangsbilder und eines unter Verwendung zweier Bewegungsvektoren interpolierten Zwischenbildes zur Veranschaulichung der für das erfindungsgemäße Verfahren ausgewählten Bildpunkte,

Figur 3     schematisch eine erste Vorrichtung zur Durchführung des erfindungsgemäßen Verfahrens,

Figur 4     eine zweite Vorrichtung zur Durchführung des erfindungsgemäßen Verfahrens,

Figur 5     eine dritte Vorrichtung zur Durchführung des erfindungsgemäßen Verfahrens,

Figur 6     eine vierte Vorrichtung zur Durchführung des erfindungsgemäßen Verfahrens,

Figur 7     eine fünfte Vorrichtung zur Durchführung eines nicht erfindungsgemäßen Verfahrens.

In den Figuren bezeichnen, sofern nicht anders angegeben gleiche Bezugszeichen gleiche Teile mit gleicher Bedeutung.

Das erfindungsgemäße Verfahren zur Interpolation eines Bildpunktes Px eines schematisch in Figur 2 dargestellten Zwischenbildes A12 zu zwei Eingangsbildern A1, A2 umfasst erfindungsgemäß das Zuordnen eines ersten und eines zweiten Bewegungsvektors vec1, vec2 zu dem zu interpolierenden Bildpunkt Px, wobei diese Bewegungsvektoren mittels herkömmlicher Verfahren zur Schätzung von Bewegungsvektoren ermittelt werden können. Anhand des ersten Bewegungsvektors wird in dem ersten Eingangsbild A1 ein erster Bildpunkt P0 ermittelt, der dem Anfangspunkt des durch den zu interpolierenden Bildpunkt Px gehenden ersten Bewegungsvektors vec1 in dem ersten Eingangsbild A1 entspricht. Außerdem wird anhand des ersten Bewegungsvektors ein zweiter Bildpunkt P1 in dem zweiten Eingangsbild A2 ermittelt, der dem Endpunkt des ersten Bewegungsvektors vec1 entspricht. In entsprechender Weise wird unter Verwendung des zweiten durch den zu interpolierenden Bildpunkt Px gehenden Bewegungsvektors vec2 ein dritter Bildpunkt P2 in dem ersten Eingangsbild, der dem Anfangspunkt des Bewegungsvektors vec2 entspricht, und ein vierter Bildpunkt P3 in dem zweiten Eingangsbild, der dem Endpunkt des Bewegungsvektors vec2 entspricht, ermittelt.

Diesen Bildpunkten P1, P2, P3, P4 sind jeweils Bildinformationswerte L1, L2, L3, L4, beispielsweise Helligkeitswerte bzw. Luminanzwerte, Farbinformationen, Kontrastinformationen oder andere verarbeitbare Repräsentanten zugeordnet, die für die Interpolation eines entsprechenden Bildinformationswertes des zu interpolierenden Bildpunktes Px verwendet werden.

Das erfindungsgemäße Verfahren sieht vor ein durch den ersten Bildinformationswert L0 und den zweiten Bildinformationswert L1 vorgegebenes Intervall zu ermitteln und die Bildinformationswerte L0-L3 zu mischen, indem der erste Bildinformationswert L0 mit einem ersten Gewichtungsfaktor k0, der zweite Bildinformationswert L1 mit einem zweiten Gewichtungsfaktor k1, der dritte Bildinformationswert L2 mit einem dritten Gewichtungsfaktor k2 und der vierte Bildinformationswert L3 mit einem vierten Gewichtungsfaktor k3 multipliziert und die gewichteten Bildinformationswerte addiert werden, um den Bildinformationswert Lx des interpolierten Bildpunktes Px zu erhalten. Die Gewichtungsfaktoren werden dabei jeweils so erzeugt, dass der Bildinformationswert Lx des interpolierten Bildpunktes Px innerhalb des durch den ersten und zweiten Bildinformationswert L0, L1 vorgegebenen Intervalls liegt. Es gilt also:

$$\texttt{Lx= L0·k0 + L1·k1 + L2·k2 + L3·k3} \qquad \texttt{(1),}$$

und

$$\texttt{Lx ist Element des Intervalls [L0;L1]} \qquad \texttt{(2)}$$

wobei der Bildinformationswert Lx vorzugsweise nicht auf den Intervallgrenzen liegt, also nicht die Werte L0 oder L1 annimmt.

Bei einer Ausführungsform der Erfindung ist vorgesehen, auch ein durch den zweiten und dritten Bildinformationswert vorgegebenes Intervall zu ermitteln, und bei der Ermittlung der Gewichtungsfaktoren k0, k1, k2, k3 anhand der obigen Gleichung (1), (2) das Intervall zu verwenden, dessen betragsmäßige Differenz der Intervallsgrenzen kleiner ist. Wenn also |L2-L3| < |L0-L1| gilt, werden die Gewichtungsfaktoren k0, k1, k2, k3 und der Bildinformationswert Lx anhand der Gleichung (1) und der folgenden Beziehung ermittelt:

$$\texttt{Lx ist Element [L2;L3]} \qquad \texttt{(3).}$$

Bei der Ermittlung der Wahl der Gewichtungsfaktoren bestehen einige Freiheitsgrade wobei die Nebenbedingung gilt:

$$\texttt{k0+k1+k2+k3=1} \qquad \texttt{(4)}$$

und für jeden der Gewichtungsfaktoren gilt:

$$\texttt{0≤ky≤1, wobei y=0,1,2,3} \qquad \texttt{(5).}$$

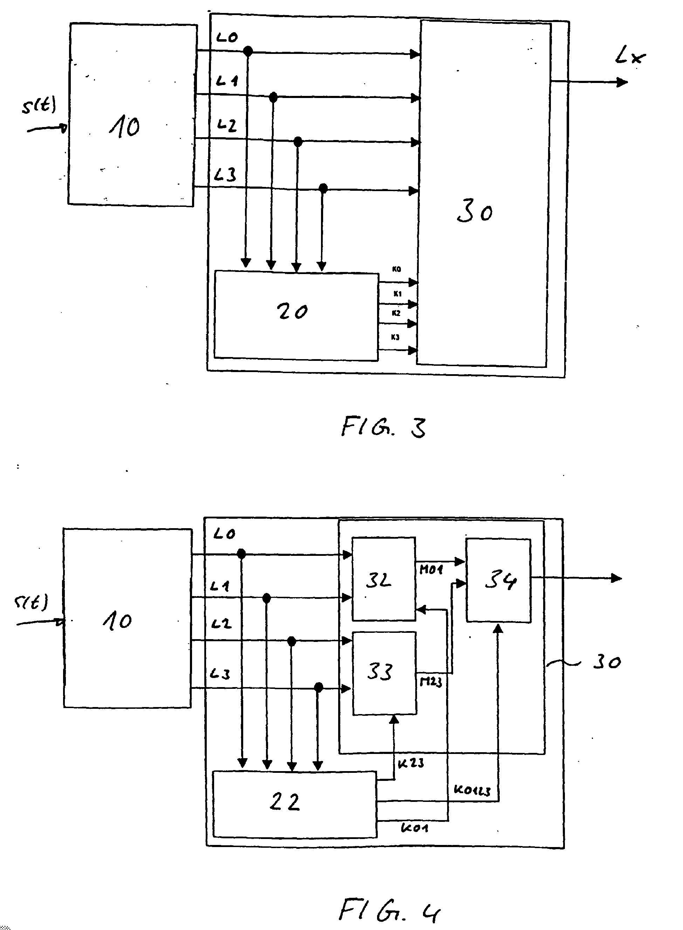

Das erfindungsgemäße Verfahren ist in Figur 3 anhand einer Vorrichtung zur Durchführung dieses Verfahrens veranschaulicht. Die Vorrichtung umfasst eine Auswahlschaltung 10, die aus einem Bildsignal s(t) unter Verwendung eines ersten und zweiten Bewegungsvektors vec1, vec2, die in der Auswahlschaltung erzeugt oder von extern zugeführt werden, die Bildinformationswerte L0, L1, L2, L3 bereitstellt. Die Bildinformationswerte werden einer Analyseeinrichtung 20 zugeführt, die unter Berücksichtigung der Gleichungen (1) und (2) bzw. (1) und (3) die Gewichtungsfaktoren k0, k1, k2, k3 bereitstellt. Diese Gewichtungsfaktoren k0, k1, k2, k3 werden zusammen mit den Bildinformationswerten L0, L1, L2, L3 einer Mischeinrichtung 30 zugeführt, die eine Mischung gemäß Gleichung (1) vornimmt, um den Bildinformationswert Lx des interpolierten Bildpunktes Px bereitzustellen.

Bei einer weiteren Ausführungsform des erfindungsgemäßen Verfahrens erfolgt die Mischung der Bildinformationswerte L0-L3 stufenweise, wobei zunächst ein erster Zwischenwert M01 in einer Mischeinrichtung 32 aus dem ersten und zweiten Bildinformationswert L0, L1 unter Verwendung eines Mischungsfaktors k01 gemäß folgender Beziehung erzeugt wird:

$$M01 = k01 \cdot L0 + (1-k01) \cdot L1 \qquad (6).$$

Entsprechend wird ein zweiter Zwischenwert M23 in einer zweiten Mischeinrichtung 33 aus dem dritten und vierten Bildinformationswert L2, L3 unter Verwendung eines Mischungsfaktors k23 gemäß folgender Beziehung erzeugt:

$$M23 = k23 \cdot L2 + (1-k23) \cdot L3 \qquad (7).$$

Für die Gewichtungsfaktoren k01, k23 gilt dabei:

$$k01+k23=1 \qquad (8)$$

sowie

$$0 \leq k01 \leq 1 \quad \text{und} \quad 0 \leq k23 \leq 1 \qquad (9)$$

Der erste Zwischenwert M01 und der zweite Zwischenwert M23 werden einer dritten Mischeinrichtung 34 zugeführt, die aus dem ersten und zweiten Zwischenwert M01, M23 unter Verwendung eines weiteren von der Analyseeinrichtung 22 bereitgestellten Mischungsfaktors k0123, den Bildinformationswert Lx anhand folgender Gleichung bereitstellt:

$$Lx = (1-k0123) \cdot M01 + k0123 \cdot M23 \qquad (9)$$

wobei $0 \leq k0123 \leq 1$ gilt.

Bei einer weiteren Ausführungsform ist vorgesehen, die Gewichtungsfaktoren kO1 bzw. k23 für die Erzeugung des ersten und zweiten Zwischenwertes M01, M23 konstant zu halten und beispielsweise k01=k23=1/2 zu wählen. In diesem Fall sind der erste Bildinformationswert L0 und der zweite Bildinformationswert L1 in dem Bildinformationswert des interpolierten Bildpunkts gleich gewichtet, und der dritte Bildinformations wert L2 und der vierte Bildinformationswert L3 sind in dem Bildinformationswert Lx des interpolierten Bildpunkts unabhängig von dem Gewichtungsfaktor k0123 gleich gewichtet. Die Analyseeinrichtung 24 stellt in diesem Fall nur den Gewichtungsfaktor k0123 aus den Bildinformationswerten L0, L1, L2, L3 zur Verfügung, wobei für k01=k23=1/2 gilt:

$$Lx = (1-k0123) \cdot M01 + (k0123 \cdot M23) =$$

$$(1-k0123) \cdot 1/2 \cdot (L0+L1) + k0123 \cdot 1/2 \cdot (L2+L3) \qquad (10).$$

Lx liegt dabei innerhalb des durch [L0;L1] vorgegebenen Intervalls, wenn der Betrag der Differenz aus Lx und der Mitte des Intervalls [L0;L1] kleiner ist als die Hälfte der Intervallbreite oder der Hälfte der Intervallbreite entspricht, wenn also gilt:

$$|Lx-(L0+L1)/2| \leq |L0-L1|/2 \quad (11).$$

Setzt man die Gleichung (10) in Gleichung (11) ein, so muss k0123 folgende Ungleichung erfüllen, damit der Bildinformationswert Lx des zu interpolierenden Bildpunktes innerhalb dieses Intervalls liegt:

$$k0123 \leq |L0-L1|/|(L2+L3)-(L0+L1)| \quad (12),$$

wobei die Analyseeinrichtung dazu ausgebildet ist, den Gewichtungsfaktor k0123 gemäß dieser Ungleichung zu wählen.
Liegt der zweite Zwischenwert M23 bereits innerhalb des durch die Bildinformationswerte L0, L1 vorgegebenen Intervalls [L0, L1], gilt also

$$2 \cdot (|M01|-|M23|) \leq |L0-L1| \quad bzw.$$

$$2 \cdot (|L0+L1|/2-|L2+L3|/2) \leq |L0-L1| \quad (13)$$

dann kann k0123 beliebig aus Werten zwischen 0 und 1, d.h. aus dem Intervall [0,1] gewählt werden.
Liegt M23 außerhalb dieses Intervalls, so muss k0123 der Ungleichung (12) genügen, wobei k0123 vorzugsweise so gewählt ist, das der Bildinformationswert Lx nicht auf einer der Intervallgrenzen liegt, also nicht dem Bildinformationswert L0 oder L1 entspricht. Vorzugsweise ist k0123 so gewählt, dass der resultierende Bildinformationswert Lx einen vorgegebenen Abstand zu den Intervallgrenzen einhält, was dann erfüllt ist, wenn

$$k0123 \leq |L0-L1|/a \cdot |(L2+L3)-(L0+L1)| \quad (14),$$

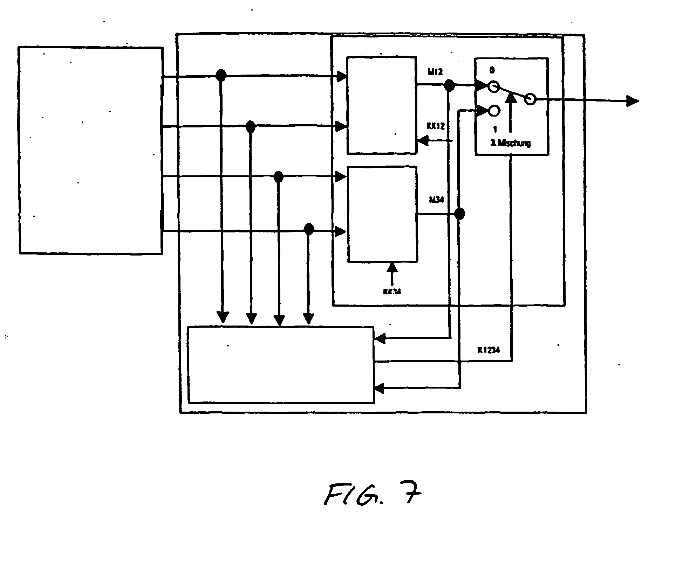

für alle a>1 gilt.
Der Faktor a ist vorzugsweise größer als 2.

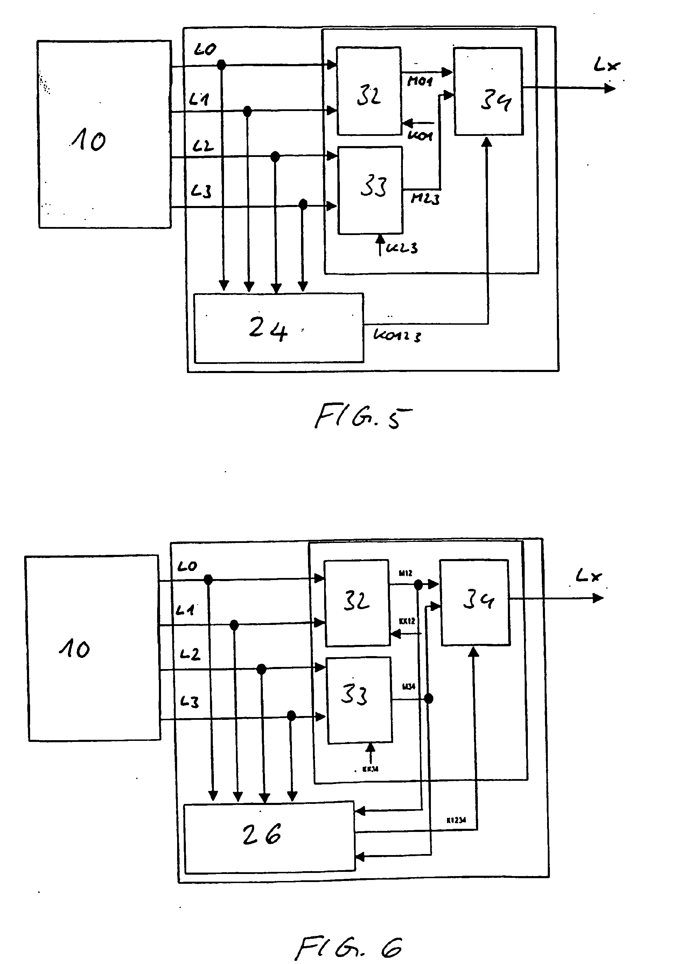

Figur 6 zeigt eine Vorrichtung zur Durchführung eines solchen Verfahrens, wobei die Vorrichtung eine Analyseeinrichtung 26 aufweist, der die Bildinformationswerte L0-L3 sowie die durch Gleichgewichtung der Bildinformationswerte L0-L3 erhaltenen Zwischenwerte M01, M23 zur Ermittlung des Gewichtungsfaktors k0123 zugeführt sind.
Bei einer weiteren Ausführungsform eines nicht erfindungsgemäßen Verfahrens ist vorgesehen, entweder den ersten Zwischenwert M01 oder den zweiten Zwischenwert M23 als Bildinformationswert Lx auszugeben. Figur 7 zeigt eine Vorrichtung zur Durchführung eines solchen Verfahrens, wobei in einer der den Mischeinrichtungen 32, 33 nachgeschalteten Mischeinrichtung 35 ein Umschalter S vorgesehen ist, der abhängig von dem Gewichtungsfaktor k0123 umgeschaltet wird. Der Gewichtungsfaktor k0123 nimmt bei dieser Ausführungsform den Wert 0 oder 1, wobei einem Wert 0 der erste Zwischenwert M01 den Bildinformationswert Lx ergibt und wobei bei einem Wert 1 des Gewichtungsfaktors k0123 der zweite Zwischenwert den Bildinformationswert Lx des interpolierten Bildpunkts ergibt.
Der Gewichtungsfaktor k0123 wird abhängig von den Bildinformationswerten L0, L1, L2, L3 ermittelt, wobei der Gewichtungsfaktor beispielsweise zu 1 gesetzt wird, um den zweiten Zwischenwert auszuwählen, wenn der zweite Zwischenwert M23 innerhalb des durch [L0, L1] vorgegebenen Intervalls liegt, und zu Null gesetzt wird, um den ersten Zwischenwert M01 auszuwählen, wenn der zweite Zwischenwert M 23 außerhalb des durch [L0;L1] vorgegebenen Intervalls liegt.
Bei einer Ausführungsform der Erfindung ist vorgesehen, einen der beiden Bewegungsvektoren vec1, vec2 als Nullvektor zu wählen. Dadurch ist gewährleistet, dass bei der Ermittlung des Bildinformationswertes Lx des interpolierten Bildpunkts der Bildinformationswert des Bildpunktes des ersten Eingangsbildes A1, dessen Position der Position des zu interpolierenden Bildpunktes Px entspricht, und der Bildinformationswert des Bildpunktes des zweiten Eingangsbildes A2, dessen Position der Position des zu interpolierenden Bildpunktes Px entspricht, berücksichtigt werden.
Bei einer weiteren Ausführungsform ist vorgesehen, für die Interpolation des Bildinformationswertes einen ersten interpolierten Bildinformationswert unter Verwendung des ersten, durch den ersten und zweiten Bildinformationswert vorgegebenen Intervalls auf eine der oben erläuterten Weisen zu generieren und einen zweiten interpolierten Bildinformationswert unter Verwendung des zweiten, durch den dritten und vierten Bildinformationswert vorgegebenen Intervalls zu erzeugen. Diese beiden Bildinformationswerte werden dann zur Bildung des Bildinformationswertes Lx miteinander gemischt, indem beispielsweise der Mittelwert gebildet wird.

**Patentansprüche**

1. Verfahren zur bewegungsvektorgestützten Interpolation eines Bildpunktes (Px) eines zwischen zwei Eingangsbildern liegenden Zwischenbildes, wobei das Verfahren folgende Merkmale aufweist:

   - Auswählen eines ersten Bildpunktes (P0), dem ein erster Bildinformationswert (L0) zugeordnet ist, aus dem ersten Eingangsbild (A1) unter Verwendung eines ersten Bewegungsvektors (vec1) und Auswählen eines zweiten Bildpunktes (P1), dem ein zweiter Bildinformationswert (L1) zugeordnet ist, aus dem zweiten Eingangsbild (A2) unter Verwendung des ersten Bewegungsvektors (vec1) ,
   - Auswählen eines dritten Bildpunktes (P2), dem ein dritter Bildinformationswert (L2) zugeordnet ist, aus dem ersten Eingangsbild (A1) unter Verwendung eines zweiten Bewegungsvektors (vec2) und Auswählen eines vierten Bildpunktes (P3), dem ein vierter Bildinformationswert (L3) zugeordnet ist, aus dem zweiten Eingangsbild (A2) unter Verwendung des zweiten Bewegungsvektors (vec2) ,
   - Ermitteln eines durch den ersten und zweiten Bildinformationswert (L0, L1) vorgegebenen Intervalls,
   - Mischen der Bildinformationswerte (L0, L1, L2, L3) indem zunächst ein erster Zwischenwert (M01) durch Mischen des ersten und zweiten Bildinformationswertes (L0, L1) und ein zweiter Zwischenwert (M23) durch Mischen des dritten und vierten Bildinformationswertes (L2, L3) erzeugt und die Zwischensignale (M01, M23) unter Verwendung eines Gewichtungsfaktors (k0123) gewichtet werden, um den Bildinformationswert (Lx) des Bildpunktes (Px) des Zwischenbildes anhand der Gleichung

$$Lx = (1 - k0123) \cdot M01 + k0123 \cdot M23$$

   zu erhalten, wobei der Gewichtungsfaktor (k0123) abhängig von den Bildinformationswerten (L0, L1, L2, L3) ermittelt und so gewählt wird, dass der Bildinformationswert (Lx) innerhalb des ermittelten Intervalls liegt, wobei für diesen Gewichtungsfaktor gilt, wenn der zweite Zwischenwert (M23) außerhalb des Intervalls liegt:

$$k0123 \leq |L0\text{-}L1|/a \cdot |(L2+L3)\text{-}(L0+L1)|,$$

   mit

   k0123: Gewichtungsfaktor ungleich 0 und ungleich 1
   L0: erster Bildinformationswert,
   L1: zweiter Bildinformationswert,
   L2: dritter Bildinformationswert,
   L3: vierter Bildinformationswert,

   und mit a>1.

2. Verfahren nach Anspruch 1, bei dem der zweite Bewegungsvektor ein Nullvektor ist.

3. Verfahren nach Anspruch 1 oder 2, bei dem der erste und zweite Bildinformationswert (L0, L1) bei der Erzeugung des ersten Zwischenwertes (M01) gleich gewichtet werden und bei dem der dritte und vierte Bildinformationswert (L2, L3) bei der Erzeugung des zweiten Zwischenwertes (M23) gleich gewichtet werden.

## Claims

1. Method for motion-vector-aided interpolation of a pixel (Px) of an intermediate image lying between two input images, the method comprising:

   selecting from the first input image (A1) a first pixel (P0) to which a first video information value (L0) is assigned, using a first motion vector (vec1), and selecting from the second input image (A2) a second pixel (P1) to which a second video information value (L1) is assigned, using the first motion vector (vec1);
   selecting from the first input image (A1) a third pixel (P2) to which a third video information value (L2) is assigned, using a second motion vector (vec2), and selecting from the second input image (A2) a fourth pixel (P3) to which a fourth video information value (L3) is assigned, using the second motion vector (vec2);
   determining an interval specified by the first video information value and the second video information value (L0, L1);
   mixing the video information values (L0, L1, L2, L3), wherein a first intermediate value (M01) is generated by mixing the first video information value and the second video information value (L0, L1) and a second intermediate value (M23) is generated by mixing the third video information value and the fourth video information value (L2, L3), and the intermediate signals (M01, M23) are weighted using a weighting factor (k0123) in order to obtain the video information value (Lx) of the pixel (Px) of the intermediate image by means of the equation

   $$\mathtt{Lx=(1-k0123)\cdot M01+k0123\cdot M23,\ wherein}$$

   the wheighting factor (k0123) is determined in dependence on the video information values (L0, L1, L2, L3) and is chosen such that the video information value (Lx) lies within the determined interval, wherein

   $$\mathtt{k0123 \leq |L0-L1|/a \cdot |(L2+L3)-(L0+L1)|}$$

   applies to the said weighting factor if the second intermediate value (M23) lies outside the interval for

   k0123: weighting factor does not equal 0 and does not equal 1
   L0: first video information value
   L1: second video information value
   L2: third video information value
   L3: fourth video information value

   and for all a>1.

2. Method according to claim 1, wherein the second motion vector is a zero vector.

3. Method according to claims 1 or 2, wherein the first video information value and the second video information value (L0, L1) are equally weighted in the generation of the first intermediate value (M01), and wherein the third video information value and the fourth video information value (L2, L3) are equally weighted in the generation of the second intermediate value (M23).

## Revendications

1. Procédé d'interpolation à vecteurs de mouvement d'un point d'image (Px) d'une image intermédiaire située entre deux images d'entrée, le procédé présentant les caractéristiques suivantes:

   sélection d'un premier point d'image (P0), auquel est attribuée une première valeur d'information d'image (L0), à partir de la première image d'entrée (A1) moyennant un premier vecteur de mouvement (vec1) et sélection d'un deuxième point d'image (P1), auquel est attribuée une deuxième valeur d'information d'image (L1), à partir de la deuxième image d'entrée (A2) moyennant le premier vecteur de mouvement (vec1),

sélection d'un troisième point d'image (P2), auquel est attribuée une troisième valeur d'information d'image (L2), à partir de la première image d'entrée (A1) moyennant un deuxième vecteur de mouvement (vec2) et sélection d'un quatrième point d'image (P3), auquel est attribuée une quatrième valeur d'information d'image (L3), à partir de la deuxième image d'entrée (A2) moyennant le deuxième vecteur de mouvement (vec2),

détermination d'un intervalle défini par la première et la deuxième valeur d'information d'image (L0, L1),

mélange des valeurs d'information d'image (L0, L1, L2, L3) en ce que d'abord une première valeur intermédiaire (M01) est générée par mélange de la première et de la deuxième valeur d'information d'image (L0, L1) et une deuxième valeur intermédiaire (M23) est générée par mélange de la troisième et de la quatrième valeur d'information d'image (L2, L3) et

les signaux intermédiaires (M01, M23) sont pondérés moyennant un facteur de pondération (k0123), pour obtenir la valeur d'information d'image (Lx) du point d'image (Px) de l'image intermédiaire à l'aide de l'équation

$$\text{Lx} = (1 - \text{k0123}) \cdot \text{M01} + \text{k0123} \cdot \text{M23},$$

le facteur de pondération (k0123) étant déterminé en fonction des valeurs d'information d'image (L0, L1, L2, L3) et choisi de telle façon que la valeur d'information d'image (Lx) soit située dans l'intervalle déterminé, sachant que pour ce facteur de pondération, on a, lorsque la deuxième valeur intermédiaire (M23) est située en dehors de l'intervalle:

$$\text{k0123} \leq |\text{L0-L1}|/a \cdot |(\text{L2+L3}) - (\text{L0+L1})|,$$

où

k0123 : facteur de pondération inégal à 0 et inégal à 1 L0 : première valeur d'information d'image,

L1 : deuxième valeur d'information d'image,

L2 : troisième valeur d'information d'image,

L3 : quatrième valeur d'information d'image,

et où a>1.

2. Procédé selon la revendication 1, dans lequel le deuxième vecteur de mouvement est un vecteur nul.

3. Procédé selon la revendication 1 ou 2, dans lequel la première et la deuxième valeur d'information d'image (L0, L1) sont pondérées pareillement lors de la génération de la première valeur intermédiaire (M01) et dans lequel la troisième et la quatrième valeur d'information d'image (L2, L3) sont pondérées pareillement lors de la génération de la deuxième valeur intermédiaire (M23).

A1

B

P0

vec1

A2

P2

B

vec1

Px

vec1

A12

FIG. 1

A1

vec1

P2

vec2

P0

Px

vec1

vec2

A12

A2

vec1

P1

vec2

P3

FIG. 2

FIG. 3

FIG. 4

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5386248 A
- US 4383272 A